# FASCICULE DE BREVET EUROPEEN

(11) **EP 3 864 272 B1**
(45) Date de publication et mention de la délivrance du brevet: **27.03.2024**
(21) Numéro de dépôt: 19835455.7
(22) Date de dépôt: 21.11.2019
(51) Int. Cl.: F02C 7/06, F02C 3/107, F01D 25/16, F02C 7/36, F01D 25/12, F02K 1/04, F01D 9/06

(54) **AGENCEMENT DE TURBORÉACTEUR DOUBLE FLUX À RÉDUCTEUR ÉPICYCLOÏDAL OU PLANÉTAIRE**
ZWEISTROM-TURBOSTRAHLTRIEBWERK MIT EPIZYKLOID- ODER PLANETENGETRIEBE
DOUBLE-FLOW TURBOJET ENGINE ASSEMBLY WITH EPICYCLOIDAL OR PLANETARY GEARBOX

(30) Priorité: 27.11.2018 FR 1871930
(43) Date de publication de la demande: 18.08.2021
(73) Titulaire: SAFRAN AIRCRAFT ENGINES, 75015 Paris (FR)
(72) Inventeur: BELMON, Guillaume, Claude, Robert, 77550 Moissy-Cramayel (FR); ZACCARDI, Cédric, 77550 Moissy-Cramayel (FR)
(74) Mandataire: Brevalex
(86) Numéro de dépôt international: PCT/FR2019/052775
(87) Numéro de publication internationale: WO 2020/109703

(56) Documents cités:
- EP-A2- 2 071 153
- US-A- 3 673 802
- US-A1- 2015 176 484

## Description

### DOMAINE TECHNIQUE

L'invention concerne un agencement de turboréacteur double corps intégrant un réducteur épicycloidal ou planétaire.

### ÉTAT DE LA TECHNIQUE ANTÉRIEURE

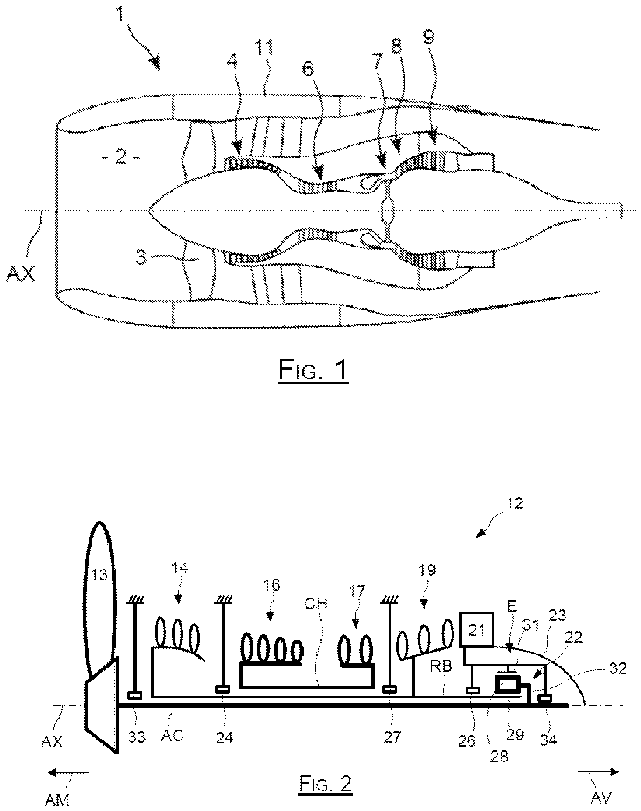

Dans un tel moteur 1 représenté sur la figure 1, l'air est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé dans des étages de compression 4 et 6 avant d'arriver dans une chambre de combustion 7, après quoi il est détendu à travers une turbine haute pression 8 et une turbine basse pression 9 avant d'être évacué vers l'arrière. Le flux secondaire est quant à lui propulsé directement vers l'arrière par la soufflante dans une veine délimitée par un carter 11.

Un tel moteur de type double-corps comporte un corps dit basse pression par lequel la soufflante 3 est couplée à la turbine basse pression, et un corps dit haute pression par lequel le compresseur est couplé à la turbine haute pression, ces deux corps étant coaxiaux et indépendants l'un de l'autre en rotation.

Grâce à un réducteur interposé entre la turbine basse pression et la soufflante, la turbine basse pression tourne plus vite que la soufflante qu'elle entraîne, afin d'accroitre le rendement. Dans cette configuration, le corps basse pression comporte un arbre central d'entrainement de la soufflante et un rotor portant la turbine basse pression en étant lié à l'arbre central par le réducteur.

Les corps haute pression et basse pression sont maintenus par des paliers portés par des éléments structuraux du moteur. En pratique, le corps basse pression est un élément critique de l'agencement, car son arbre central s'étend sensiblement sur toute la longueur du moteur, de sorte qu'en service, c'est-à-dire lorsqu'il tourne, il peut être sujet à des modes vibratoires susceptibles de conduire à la ruine du moteur. En particulier, du fait de sa longueur importante, le premier mode de vibration en flexion de l'arbre central se trouve être dans sa plage de fonctionnement, c'est-à-dire dans la plage de fréquences correspondant à ses fréquences de rotation.

Cette situation nécessite de réaliser un équilibrage à grande vitesse de l'arbre central, mais également de prévoir des paliers capables d'amortir ses modes vibratoires pour limiter les éventuelles instabilités. De tels paliers, généralement désignés par l'acronyme SFD signifiant « *squeeze film dampers* » comportent une cage souple fixe portant un roulement recevant l'arbre central, et autour de laquelle est maintenue une pression hydraulique, ce type de palier étant coûteux à mettre en oeuvre.

Le but de l'invention est d'apporter des solutions d'agencement permettant d'améliorer le maintien des éléments rotatifs basse pression pour limiter le recours à des paliers complexes d'amortissement de modes vibratoires. les documents US2015/176484A1, US3673802A et EP2071153A2 divulguent des turboréacteurs à double flux avec réducteur aval et agencement de paliers selon l'art antérieur.

### EXPOSÉ DE L'INVENTION

A cet effet, l'invention a pour objet un turboréacteur à double flux comportant un arbre central entouré coaxialement d'une part par un rotor basse pression et d'autre part par un corps haute pression coaxiaux, le corps haute pression étant indépendant en rotation du rotor basse pression et de l'arbre central, ce turboréacteur comportant depuis l'amont vers l'aval considérés selon le sens de circulation des flux qui le traversent lorsqu'il est en service :
- une soufflante entraînée par l'arbre central ;
- un compresseur basse pression porté par le rotor basse pression ;
- un carter inter-compresseurs ;
- un compresseur haute pression et une turbine haute pression faisant partie du corps haute pression ;
- un carter inter-turbines ;
- une turbine basse pression portée par le rotor basse pression ;
- un carter d'échappement ;
ce turboréacteur comportant en outre :
- un palier amont de rotor porté par le carter inter-compresseurs et qui guide en rotation le rotor basse pression ;
- un palier aval de rotor porté par le carter d'échappement, et qui guide en rotation le rotor basse pression ;
- un réducteur par l'intermédiaire duquel le rotor basse pression entraine l'arbre central, ce réducteur étant situé en aval du palier aval de rotor ;
- un palier aval d'arbre qui guide en rotation l'arbre central en étant situé en aval du palier aval de rotor.

Avec cet agencement, la vitesse de l'arbre central est abaissée et sa longueur est augmentée grâce au palier d'arbre situé en aval, ce qui contribue à diminuer les fréquences de ses modes propres pour les éloigner des fréquences de rotation. L'abaissement de cette vitesse de l'arbre central permet également d'augmenter le diamètre de soufflante sans que la vitesse en extrémité des pales de cette soufflante ne soit excessive.

L'invention concerne également un turboréacteur ainsi défini, dans lequel le réducteur est situé en aval d'au moins un bras radial de passage de servitude faisant partie du carter d'échappement et reliant une virole interne du carter d'échappement à une virole externe de ce carter d'échappement.

L'invention concerne également un turboréacteur ainsi défini, dans lequel le palier aval d'arbre central est un palier inter-arbres qui entoure l'arbre central et qui est entouré par le rotor basse pression.

L'invention concerne également un turboréacteur ainsi défini, dans lequel le palier aval d'arbre central est porté par le carter d'échappement en étant situé en aval du réducteur.

L'invention concerne également un turboréacteur ainsi défini, comprenant un palier médian basse pression porté par le carter inter-turbines et recevant le rotor basse pression.

L'invention concerne également un turboréacteur ainsi défini, comprenant un cône de sortie porté par le carter d'échappement, et dans lequel le palier aval d'arbre est situé dans un espace interne du cône de sortie.

L'invention concerne également un turboréacteur ainsi défini, dans lequel le réducteur est situé à l'intérieur de l'espace interne.

L'invention concerne également un turboréacteur ainsi défini, dans lequel le réducteur est un réducteur épicycloïdal comprenant :
- des satellites portés par un porte satellites qui est porté par l'arbre central ;
- une couronne interne qui est portée par le rotor basse pression ;
- une couronne externe qui est portée par le carter d'échappement ;
- chaque satellite étant engrené avec la couronne interne et la couronne externe.

L'invention concerne également un turboréacteur ainsi défini, dans lequel le réducteur est un réducteur planétaire comprenant :
- des satellites portés par un porte satellites qui est porté par le carter d'échappement ;
- une couronne interne qui est portée par le rotor basse pression ;
- une couronne externe qui est portée par l'arbre central ;
- chaque satellite étant engrené avec la couronne interne et la couronne externe.

### BRÈVE DESCRIPTION DES DESSINS

[Fig. 1] est une vue en coupe longitudinale d'un turboréacteur double flux et double corps connu ;
[Fig. 2] est une vue schématique en coupe longitudinale d'une architecture de turboréacteur selon l'invention ;
[Fig. 3] est une représentation schématique en coupe longitudinale d'une portion arrière de turboréacteur selon l'invention ;
[Fig. 4] est une représentation schématique en coupe longitudinale d'une portion arrière de turboréacteur conformément à une variante de l'invention ;
[Fig. 5] est une représentation schématique du refroidissement du cône de sortie dans l'architecture selon l'invention.

### EXPOSÉ DÉTAILLÉ DE MODES DE RÉALISATION PARTICULIERS

Comme représenté schématiquement sur la figure 2, le moteur selon l'invention présente une architecture comprenant une soufflante 13 à sa partie amont AM qui est entraînée en rotation par un arbre central AC s'étendant sur l'essentiel de la longueur du moteur, depuis l'amont AM vers l'aval AV définis par rapport au sens de circulation du flux dans ce moteur, conformément aux conventions usuelles.

Cette soufflante 13 est suivie d'un compresseur basse pression 14 qui fait partie d'un rotor basse pression RB entourant l'arbre central AC, ce compresseur basse pression 14 étant suivi d'un compresseur haute pression 16, pour comprimer le flux avant son admission dans une chambre de combustion non représentée située immédiatement en aval de ce compresseur haute pression 16.

Après passage dans la chambre de combustion, le fluide est détendu à travers une turbine haute pression 17 qui entraine le compresseur 16. Les aubages du compresseur haute pression 16 et de la turbine haute pression 17 sont portés par un même corps haute pression CH ou font partie intégrante de celui-ci. Ce corps haute pression CH s'étend dans la région centrale du moteur le long de l'axe AX, il entoure le rotor basse pression RB en étant complètement indépendant en rotation de celui-ci.

Après avoir traversé la turbine haute pression 17, le fluide transite dans un carter inter-turbines non représenté, avant de traverser une turbine basse pression 19, pour être ensuite évacué à travers un carter d'échappement 21.

Le carter inter-turbines comporte une virole externe et une virole interne concentriques délimitant entre elles un espace annulaire de passage du flux primaire, ainsi qu'un ensemble de pales radiales fixes reliant chacune la virole externe à la virole interne et permettant de dévriller le flux primaire. De manière analogue, le carter d'échappement 21 comporte une virole externe et une virole interne concentriques délimitant un espace annulaire de passage du flux primaire détendu, ainsi qu'un ensemble de bras radiaux fixes reliant chacun ces deux viroles l'une à l'autre.

La turbine basse pression 19 et le compresseur basse pression 14 sont portés par le rotor basse pression RB pour former un tout avec celui-ci, et ce rotor basse pression est lié en rotation à l'arbre central AC par un réducteur épicycloïdal 22 situé à son aval AV. Le rotor basse pression RB tourne ainsi plus vite que la soufflante 13, ce qui permet d'améliorer le rendement du moteur.

Le carter d'échappement 21 porte un cône de sortie 23 qui ferme la région aval du moteur située radialement à l'intérieur de la veine primaire, ce cône de sortie 23 s'étendant vers l'aval. Le réducteur 22 est situé à l'intérieur d'un espace interne E délimité par le carter d'échappement 21 et par le cône de sortie 23 prolongeant ce carter 21.

Le rotor basse pression RB est maintenu et guidé en rotation par un palier amont 24 situé en amont du compresseur haute pression 16 en étant porté par un carter inter-compresseurs non représenté s'étendant entre les compresseurs 14 et 16, et par un palier aval 26 situé entre cette turbine basse pression 19 et le réducteur 22 en étant porté par le carter d'échappement 21.

Avantageusement, un palier médian additionnel 27 est prévu entre la turbine haute pression 17 et la turbine basse pression 19, en étant porté par un carter inter-turbines non représenté situé entre les turbines 17 et 19, pour maintenir le rotor basse pression RB dans cette région. Le palier amont 24 est ainsi situé en amont du corps haute pression CH, alors que les paliers médian 27 et aval 26 sont situés en aval du corps haute pression CH.

Au moins l'un des deux paliers 24 et 26 est un palier de butée, c'est-à-dire récupérant l'effort axial de poussée généré par la turbine basse pression 19 pour le transférer à la structure du moteur.

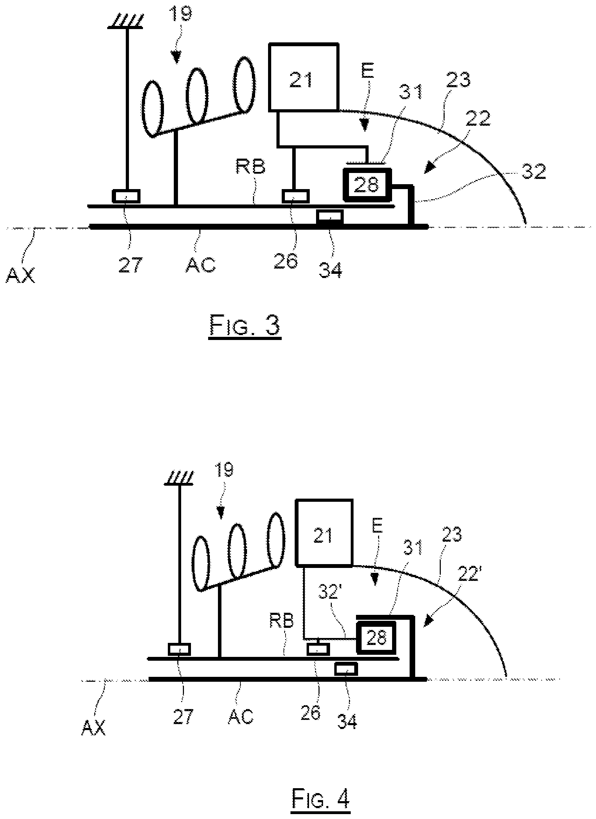

Le réducteur 22 de l'exemple des figures 2 et 3 est un réducteur épicycloïdal. Il comporte des pignons satellites 28 entourant une couronne interne 29 et entourés par une couronne externe 31 en étant chacun engrené avec ces deux couronnes, ces pignons 28 étant portés par un porte satellites 32.

Le porte satellites 32 est mobile en rotation en étant rigidement solidaire de l'arbre central AC. La couronne interne 29 est quant à elle rigidement solidaire du rotor basse pression RB alors que la couronne externe 31 est rigidement solidaire du carter d'échappement 21 en étant portée par celui-ci.

Il est également possible de prévoir un réducteur de type planétaire. Dans ce cas qui est représenté sur la figure 4, le réducteur 22' comporte un porte satellites 32' qui est fixe en rotation en étant porté par le carter d'échappement, et la couronne externe 31 est rigidement solidiare de l'arbre central AC. La couronne interne 29 est quant à elle rigidement solidaire du rotor basse pression RB comme dans le cas d'un réducteur épicycloïdal.

L'arbre central AC est porté et guidé en rotation par un palier amont d'arbre 33 situé en partie amont du moteur, et par un palier d'arbre aval 34 qui est situé en aval du réducteur 22, en étant porté par le carter d'échappement 21. Comme visible sur la figure 2, le palier amont 33 est situé enre la soufflante 13 et le compresseur basse pression 14, le palier d'arbre aval 34 est situé dans un espace interne E du cône de sortie 23, en aval du réducteur 22.

Dans l'exemple de la figure 1, le palier aval d'arbre central 34 est un palier fixe porté par le carter d'échappement 21 en étant situé en aval du réducteur 22. Complémentairement, ou alternativement comme représenté sur la figure 3, le palier aval d'arbre 34 peut être un palier inter-arbres, qui entoure l'arbre AC pour le maintenir et le guider en rotation, en étant entouré par le rotor RB, et en étant situé en aval du palier de rotor aval 26. Dans cette configuration, la portion aval de l'arbre central AC est ainsi maintenue par l'intermédiaire du rotor basse pression RB, et non pas directement par le carter d'échappement 21.

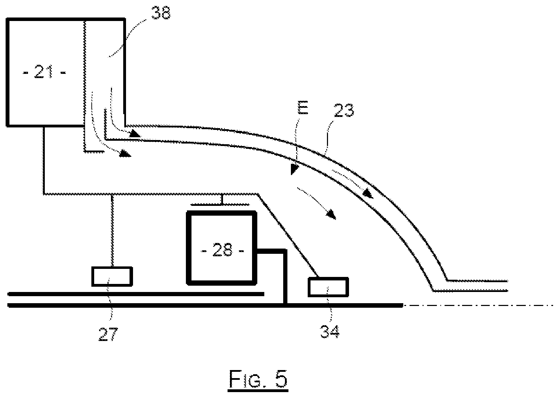

Comme représenté schématiquement sur la figure 5, le refroidissement de l'espace interne E du cône de sortie est avantageusement assuré grâce à un ou plusieurs bras radiaux 38 du carter d'échappement 21, par lequel est acheminé l'air de refroidissement provenant de la veine secondaire. L'air de refroidissement est alors partagé à son arrivée dans l'espace interne E en un premier flux assurant le refroidissement du cône 23 proprement dit, et un second flux refroidissant les composants situés dans l'espace interne.

La paroi du cône 23 est avantageusement prévue double pour délimiter un espace de révolution dans lequel circule le premier flux de manière à refroidir le plus efficacement cette paroi qui est directement exposée au flux primaire sortant du carter d'échappement 21.

Le réducteur est avantageusement installé entièrement dans le cône de sortie 23, en aval de la turbine basse pression et en particulier en aval des bras radiaux 38 du carter d'échappement 21 pour déporter le centre de gravité du moteur vers l'aval. A la différence d'aubes fixes pouvant équiper le carter d'échappement, de tels bras radiaux ont une fonction structurale et un ou plusieurs de ces bras radiaux assure un passage de servitude, c'est-à-dire la transmission d'une commande mécanique ou autre entre l'intérieur et l'extérieur du carter d'échappement.

Cette disposition du réducteur en aval des bras radiaux est favorable au regard du poids en porte-à-faux du moteur installé sous l'aile de l'aéronef. Dans les même but, les paliers 26, 27 et 34 sont avantageusement situés longitudinalement au plus proche des bras radiaux 38.

D'une manière générale, l'invention permet de déplacer les fréquences propres des éléments rotatifs basse pression hors de ses fréquences de rotation. Elle permet ainsi de limiter la mise en oeuvre de paliers complexes tels que les paliers SFD, et de réduire la précision d'équilibrage requise pour le corps basse pression.

## Revendications

1. Turboréacteur à double flux comportant un arbre central (AC) entouré coaxialement d'une part par un rotor basse pression (RB) et d'autre part par un corps haute pression (CH) coaxiaux, le corps haute pression (CH) étant indépendant en rotation du rotor basse pression (RB) et de l'arbre central (AC), ce turboréacteur comportant depuis l'amont (AM) vers l'aval (AV) considérés selon le sens de circulation des flux qui le traversent lorsqu'il est en service :
- une soufflante (13) entraînée par l'arbre central (AC) ;
- un compresseur basse pression (14) porté par le rotor basse pression (RB) ;
- un carter inter-compresseurs ;
- un compresseur haute pression (16) et une turbine haute pression (17) faisant partie du corps haute pression (CH) ;
- un carter inter-turbines (18) ;
- une turbine basse pression (19) portée par le rotor basse pression (RB) ;
- un carter d'échappement (21) ;
ce turboréacteur comportant en outre :
- un palier amont de rotor (24) porté par le carter inter-compresseurs et qui guide en rotation le rotor basse pression (RB) ;
- un palier aval de rotor (26) porté par le carter d'échappement (21), et qui guide en rotation le rotor basse pression (RB) ; **caractérisé par**
- un réducteur (22, 22') par l'intermédiaire duquel le rotor basse pression (RB) entraine l'arbre central (AC), ce réducteur étant situé en aval du palier aval de rotor (26) ;
- un palier aval d'arbre (34) qui guide en rotation l'arbre central (AC) en étant situé en aval du palier aval de rotor (26).

2. Turboréacteur selon la revendication 1, dans lequel le réducteur (22, 22') est situé en aval d'au moins un bras radial (38) de passage de servitude faisant partie du carter d'échappement (21) et reliant une virole interne du carter d'échappement (21) à une virole externe de ce carter d'échappement (21).

3. Turboréacteur selon la revendication 1 ou 2, dans lequel le palier aval d'arbre central (34) est un palier inter-arbres qui entoure l'arbre central (AC) et qui est entouré par le rotor basse pression (RB).

4. Turboréacteur selon la revendication 1 ou 2, dans lequel le palier aval d'arbre central (34) est porté par le carter d'échappement (21) en étant situé en aval du réducteur (22, 22').

5. Turboréacteur selon l'une des revendications précédentes, comprenant un palier médian basse pression (27) porté par le carter inter-turbines (18) et recevant le rotor basse pression (RB).

6. Turboréacteur selon l'une des revendications précédentes, comprenant un cône de sortie (23) porté par le carter d'échappement (21), et dans lequel le palier aval d'arbre (34) est situé dans un espace interne (E) du cône de sortie (23).

7. Turboréacteur selon l'une des revendications précédentes, dans lequel le réducteur (22, 22') est situé à l'intérieur de l'espace interne (E).

8. Turboréacteur selon l'une des revendications précédentes, dans lequel le réducteur (22) est un réducteur épicycloïdal comprenant :
- des satellites (28) portés par un porte satellites (32) qui est guidé en rotation par l'arbre central (AC) ;
- une couronne interne (29) qui est portée par le rotor basse pression (RB) ;
- une couronne externe (31) qui est portée par le carter d'échappement (21) ;
- chaque satellite (28) étant engrené avec la couronne interne (29) et la couronne externe (31).

9. Turboréacteur selon l'une des revendications précédentes, dans lequel le réducteur (22') est un réducteur planétaire comprenant :
- des satellites (28) portés par un porte satellites (32') qui est porté par le carter d'échappement (21) ;
- une couronne interne (29) qui est portée par le rotor basse pression (RB) ;
- une couronne externe (31) qui est portée par l'arbre central (AC) ;
- chaque satellite (28) étant engrené avec la couronne interne (29) et la couronne externe (31).

## Patentansprüche

1. Doppelstrom-Turbostrahltriebwerk, das eine zentrale Welle (AC) umfasst, die koaxial einerseits von einem Niederdruckrotor (RB) und andererseits von einem Hochdruckkörper (CH) umgeben ist, die koaxial zueinander sind, wobei der Hochdruckkörper (CH) drehunabhängig vom Niederdruckrotor (RB) und von der zentralen Welle (AC) ist, wobei das Turbostrahltriebwerk von stromaufwärts (AM) nach stromabwärts (AV) entsprechend der Zirkulationsrichtung der Strömung, die ihm während des Betriebs durchströmt, Folgendes umfasst:
- einen Lüfter (13), der von der zentralen Welle (AC) angetrieben wird;
- einen Niederdruckkompressor (14), der vom Niederdruckrotor (RB) getragen wird;
- ein Zwischenkompressorengehäuse;
- ein Hochdruckkompressor (16) und eine Hochdruckturbine (17), die zum Hochdruckkörper (CH) gehören;
- ein Zwischenturbinengehäuse (18);
- eine Niederdruckturbine (19), die vom Niederdruckrotor (RB) getragen wird;
- ein Abgasgehäuse (21);
wobei das Turbostrahltriebwerk ferner Folgendes umfasst:
- ein stromaufwärtiges Rotorlager (24), das vom Zwischenkompressorengehäuse getragen wird und den Niederdruckrotor (RB) drehbar führt;
- ein stromabwärtiges Rotorlager (26), das vom Abgasgehäuse (21) getragen wird und den Niederdruckrotor (RB) drehbar führt; **gekennzeichnet durch**
- ein Getriebe (22, 22'), über das der Niederdruckrotor (RB) die zentrale Welle (AC) antreibt, wobei sich das Getriebe stromabwärts des stromabwärtigen Rotorlagers (26) befindet;
- ein stromabwärtiges Wellenlager (34), das die zentrale Welle (AC) drehbar führt, während es sich stromabwärts des stromabwärtigen Rotorlagers (26) befindet.

2. Turbostrahltriebwerk nach Anspruch 1, wobei sich das Getriebe (22, 22') stromabwärts von mindestens einem radialen Arm (38) für den Servicedurchgang befindet, der zum Abgasgehäuse (21) gehört und eine innere Ummantelung des Abgasgehäuses (21) mit einer äußeren Ummantelung des Abgasgehäuses (21) verbindet.

3. Turbostrahltriebwerk nach Anspruch 1 oder 2, wobei das stromabwärtige Lager (34) der zentralen Welle ein Zwischenwellenlager ist, das die zentrale Welle (AC) umgibt und vom Niederdruckrotor (RB) umgeben ist.

4. Turbostrahltriebwerk nach Anspruch 1 oder 2, wobei das stromabwärtige Lager (34) der zentralen Welle vom Abgasgehäuse (21) getragen wird, wobei es sich stromabwärts des Getriebes (22, 22') befindet.

5. Turbostrahltriebwerk nach einem der vorhergehenden Ansprüche, das ein Niederdruck-Mittellager (27) umfasst, das vom Zwischenturbinengehäuse (18) getragen wird und den Niederdruckrotor (RB) aufnimmt.

6. Turbostrahltriebwerk nach einem der vorhergehenden Ansprüche, das einen Ausströmkegel (23) umfasst, der vom Abgasgehäuse (21) getragen wird, und wobei sich das stromabwärtige Wellenlager (34) in einem Innenraum (E) des Ausströmkegels (23) befindet.

7. Turbostrahltriebwerk nach einem der vorhergehenden Ansprüche, wobei sich das Getriebe (22, 22') im Inneren des Innenraums (E) befindet.

8. Turbostrahltriebwerk nach einem der vorhergehenden Ansprüche, wobei das Getriebe (22, 22') ein Epizykloidgetriebe ist, das Folgendes umfasst:
- Planetenräder (28), die von einem Planetenradträger (32) getragen werden, der von der zentralen Welle (AC) drehbar geführt wird;
- eine innere Krone (29), die vom Niederdruckrotor (RB) getragen wird;
- eine äußere Krone (31), die vom Abgasgehäuse (21) getragen wird;
- wobei jedes Planetenrad (28) in die innere Krone (29) und die äußere Krone (31) eingreift.

9. Turbostrahltriebwerk nach einem der vorhergehenden Ansprüche, wobei das Getriebe (22') ein Planetengetriebe ist, das Folgendes umfasst:
- Planetenräder (28), die von einem Planetenradträger (32') getragen werden, der vom Abgasgehäuse (21) getragen wird;
- eine innere Krone (29), die vom Niederdruckrotor (RB) getragen wird;
- eine äußere Krone (31), die von der zentralen Welle (AC)getragen wird;
- wobei jedes Planetenrad (28) in die innere Krone (29) und die äußere Krone (31) eingreift.

## Claims

1. A double-flow turbojet engine including a central shaft (AC) coaxially surrounded, on the one hand, by a low-pressure rotor (RB) and, on the other hand, by a high-pressure spool (CH), coaxial with each other, the high-pressure spool (CH) being rotatably independent of the low-pressure rotor (RB) and of the central shaft (AC), this turbojet engine including from upstream (AM) to downstream (AV) according to the direction of circulation of the flow that passes therethrough when it is operating:
- a fan (13) driven by the central shaft (AC);
- a low-pressure compressor (14) carried by the low-pressure rotor (RB);
- an inter-compressor casing;
- a high-pressure compressor (16) and a high-pressure turbine (17) belonging to the high-pressure spool (CH);
- an inter-turbine casing (18);
- a low-pressure turbine (19) carried by the low-pressure rotor (RB);
- an exhaust casing (21);
this turbojet engine further including:
- an upstream rotor bearing (24) carried by the inter-compressor casing and which rotatably guides the low-pressure rotor (RB);
- a downstream rotor bearing (26) carried by the exhaust casing (21), and which rotatably guides the low-pressure rotor (RB);
**characterized by** :
- a gearbox (22, 22') through which the low-pressure rotor (RB) drives the central shaft (AC), this gearbox being located downstream of the downstream rotor bearing (26);
- a downstream shaft bearing (34) which rotatably guides the central shaft (AC) while being located downstream of the downstream rotor bearing (26).

2. The turbojet engine according to claim 1, wherein the gearbox (22, 22') is located downstream of at least one radial arm (38) for the passage of a utility belonging to the exhaust casing (21) and linking an inner shroud of the exhaust casing (21) to an outer shroud of this exhaust casing (21).

3. The turbojet engine according to claim 1 or 2, wherein the downstream central shaft bearing (34) is an inter-shaft bearing which surrounds the central shaft (AC) and which is surrounded by the low-pressure rotor (RB).

4. The turbojet engine according to claim 1 or 2, wherein the downstream central shaft bearing (34) is carried by the exhaust casing (21) while being located downstream of the gearbox (22, 22').

5. The turbojet engine according to one of the preceding claims, comprising a low-pressure middle bearing (27) carried by the inter-turbine casing (18) and receiving the low-pressure rotor (RB).

6. The turbojet engine according to one of the preceding claims, comprising an outlet cone (23) carried by the exhaust casing (21), and wherein the downstream shaft bearing (34) is located in an inner space (E) of the outlet cone (23).

7. The turbojet engine according to one of the preceding claims, wherein the gearbox (22, 22') is located inside the inner space (E).

8. The turbojet engine according to one of the preceding claims, wherein the gearbox (22) is an epicycloidal gearbox (22) comprising:
- planets (28) carried by a planet carrier (32) which is rotatably guided by the central shaft (AC);
- an inner crown (29) which is carried by the low-pressure rotor (RB);
- an outer crown (31) which is carried by the exhaust casing (21);
- each planet (28) meshing with the inner crown (29) and the outer crown (31).

9. The turbojet engine according to one of the preceding claims, wherein the gearbox (22') is a planetary gearbox comprising:
- planets (28) carried by a planet carrier (32') which is carried by the exhaust casing (21);
- an inner crown (29) which is carried by the low-pressure rotor (RB);
- an outer crown (31) which is carried by the central shaft (AC);
- each planet (28) meshing with the inner crown (29) and the outer crown (31).
